# FASCICULE DE BREVET EUROPEEN

(11) **EP 1 233 876 B1**
(45) Date de publication et mention de la délivrance du brevet: **30.03.2005**
(21) Numéro de dépôt: 00981460.9
(22) Date de dépôt: 22.11.2000
(51) Int. Cl.: B60J 7/14

(54) **SYSTEME DE TOIT RIGIDE ESCAMOTABLE POUR STRUCTURE DECOUVRABLE, NOTAMMENT POUR VEHICULE**
VORRICHTUNG FÜR EIN VERSENKBARES, STARRES DACH EINER CABRIOSTRUKTUR, INSBESONDERE FÜR EIN FAHRZEUG
FOLDING HARD TOP SYSTEM FOR CONVERTIBLE STRUCTURE, IN PARTICULAR FOR MOTOR VEHICLE

(30) Priorité: 30.11.1999 FR 9915106
(43) Date de publication de la demande: 28.08.2002
(73) Titulaire: Société Européenne des Brevets Automobiles, 75011 Paris (FR)
(72) Inventeur: Guillez, Jean-Marc, 79140 Cerizay (FR); Queveau, Paul, 79140 Cerizay (FR); Queveau, Gérard, 79140 Cerizay (FR)
(74) Mandataire: Rémont, Claude
(86) Numéro de dépôt international: PCT/FR2000/003254
(87) Numéro de publication internationale: WO 2001/040007

(56) Documents cités:
- EP-A- 0 936 095
- GB-A- 191 272
- US-A- 2 704 225

## Description

La présente invention concerne un système de toit rigide escamotable pour structure découvrable, notamment pour véhicule automobile.

On connaît, notamment d'après le US-A-3 575 464, un système de toit rigide escamotable constitué d'au moins deux panneaux rigides mobiles l'un par rapport à l'autre et par rapport à l'habitacle de la structure, à savoir un premier panneau arrière et un second panneau avant solidarisés l'un à l'autre par des moyens de solidarisation agencés de manière telle que le second panneau avant est mobile par rapport au premier panneau arrière entre une position fermée dans laquelle il recouvre l'habitacle, et une position ouverte dans laquelle il se trouve dans une position sensiblement superposée par rapport au premier panneau arrière, le premier panneau arrière étant monté de manière pivotante par rapport au châssis de la structure de façon à pivoter, en entraînant le second panneau avant, entre une position fermée, dans laquelle il recouvre l'habitacle, et une position ouverte dans laquelle le premier panneau arrière et le second panneau avant sont logés, dans leur position sensiblement superposée, derrière l'habitacle.

Selon cet état antérieur de la technique, le second panneau avant du toit pivote vers le haut et vers l'arrière par rapport au premier panneau arrière, de sorte que, dans la position ouverte du toit, les deux panneaux sont logés dans le coffre arrière du véhicule considéré, la concavité du panneau avant étant tournée vers le haut alors que la concavité du panneau arrière est tournée vers le bas, de sorte que ces deux panneaux occupent un volume important à l'intérieur du coffre arrière du véhicule.

A partir de EP-A-0936095 est également connu un système de toit rigide escamotable comprenant un premier panneau arrière et un second panneau avant solidarisés l'un à l'autre par des jeux de bras auxiliaires pivotants formant des parallélogrammes déformables de part et d'autre des panneaux. Dans ce système de toit, le premier panneau arrière est montée de manière pivotante par rapport au châssis du véhicule de façon à pivoter en entraînant le second panneau avant entre une position fermée dans laquelle il recouvre l'habitacle et une position ouverte dans laquelle le premier panneau arrière et le second panneau avant sont logés, dans leur position sensiblement superposées, derrière l'habitacle.

Toutefois, de telles structures connues avec deux panneaux pivotants l'un par rapport à l'autre posent des problèmes délicats de liaison et d'étanchéité dans la position fermée du toit.

La présente invention a pour but de remédier aux inconvénients des systèmes de toits connus et de proposer un système de toit du type précité qui soit simple, fiable et économique et qui permette en particulier de simplifier les problèmes de liaison et d'étanchéité entre panneaux.

Suivant la présente invention, le système de toit rigide escamotable du type précité selon EP-A-0 936 095 est défini par la revendication 1 jointe.

Les deux jeux de deux bras auxiliaires pivotants maintiennent ainsi le second panneau avant sensiblement parallèle à lui-même, de sorte que le second panneau avant a sa concavité qui reste tournée dans le même sens que celle du premier panneau arrière. Ainsi, les deux panneaux occupent, dans la position ouverte du toit, un volume minimal quelle que soit la position finale de ces deux panneaux dans le coffre arrière du véhicule.

En outre, les mouvements de pivotement des bras auxiliaires ne sont en aucune manière perturbés par les mouvements de déplacement des panneaux du toit, ce qui simplifie considérablement tous les problèmes de découpe des panneaux, d'une part, d'étanchéité à la fois entre panneaux et entre les panneaux et la structure considérée, d'autre part.

D'autres particularités et avantages de la présente invention apparaîtront dans la description détaillée ci-après.

Aux dessins annexés, donnés uniquement à titre d'exemples non limitatifs :
- la figure 1 est un schéma en coupe longitudinale illustrant un mode de réalisation d'un système de toit selon la présente invention ;
- la figure 2 est une vue semblable à la figure 1 illustrant un mode de réalisation des moyens selon l'invention pour faire pivoter les bras auxiliaires ;
- la figure 3 est une vue agrandie en coupe axiale transversale verticale d'un mode de réalisation de l'arbre de pivotement de chaque extrémité de chaque bras auxiliaire ;
- la figure 4 est une vue schématique en élévation depuis la gauche de la figure 3 ;
- la figure 5 est une vue en réduction semblable à la figure 1 illustrant un autre mode de réalisation de la présente invention ;
- les figures 6 à 11 sont des vues schématiques illustrant respectivement la mise en oeuvre des modes de réalisation des figures 1 et 5 respectivement sur trois types différents de carrosserie de véhicule.

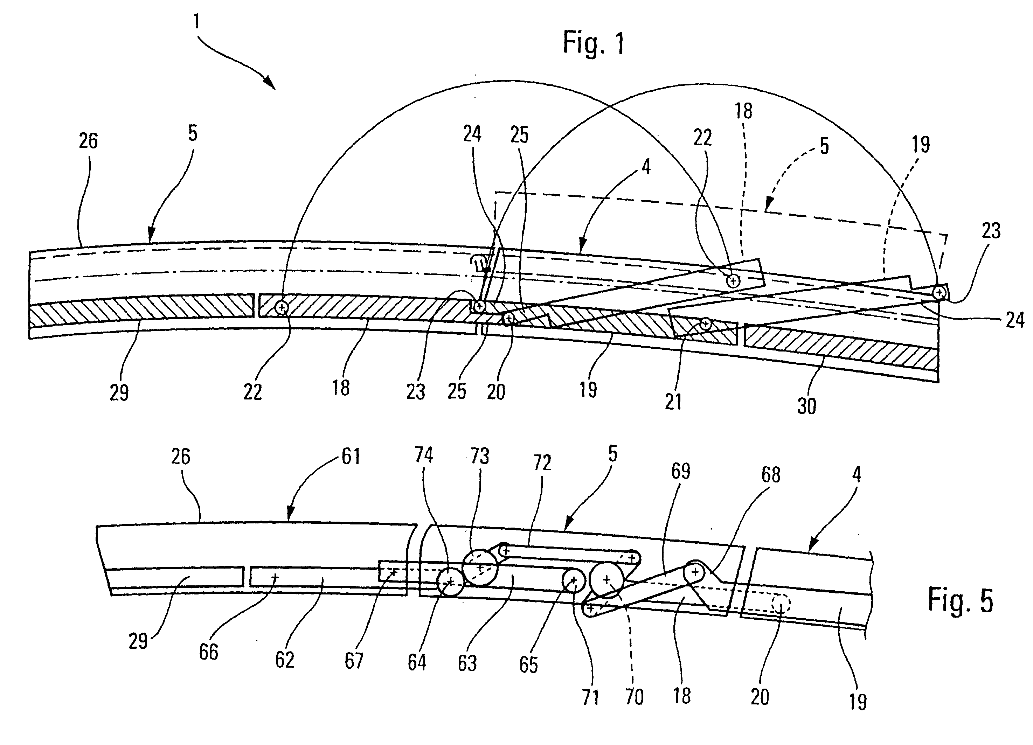

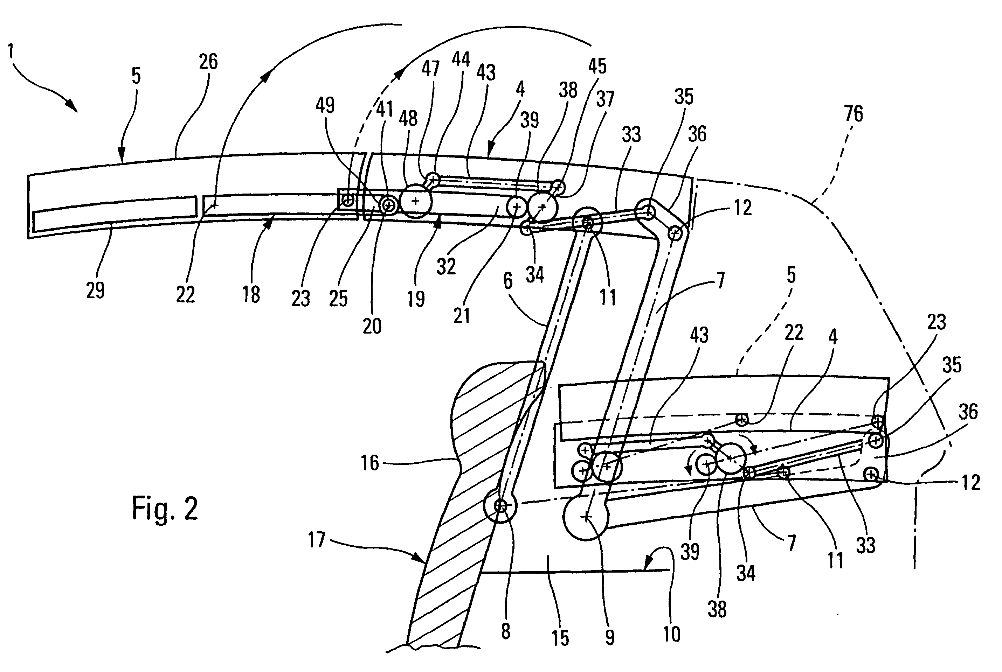

Dans le mode de réalisation représenté aux figures 1 et 2, le système de toit rigide escamotable 1 pour structure découvrable 2, notamment pour véhicule automobile, est constitué d'au moins deux panneaux rigides 4, 5 mobiles l'un par rapport à l'autre et par rapport à l'habitacle 3 du véhicule 2.

Dans cet exemple, le toit 1 est constitué d'un premier panneau arrière 4 et d'un second panneau avant 5 solidarisés l'un à l'autre par des moyens de solidarisation décrits ci-dessous.

Ces moyens de solidarisation sont agencés de manière telle que le second panneau avant 5 est mobile par rapport au premier panneau arrière 4 entre une position fermée, schématisée en traits pleins à la figure 1, dans laquelle il recouvre l'habitacle 3, et une position ouverte schématisée en tirets à la figure 1, dans laquelle il se trouve dans une position sensiblement superposée par rapport au premier panneau arrière 4.

Dans l'exemple représenté à la figure 2, le premier panneau arrière 4 est monté de manière pivotante sur deux jeux de bras principaux pivotants avant 6 et arrière 7, sensiblement parallèles, articulés chacun à une extrémité inférieure à un point d'articulation inférieur respectif 8, 9 fixé au châssis, schématisé en 10, de la structure 2 et à une extrémité supérieure, à un point d'articulation supérieur respectif 11, 12 fixé au premier panneau arrière 4.

Le premier panneau arrière 4 peut ainsi pivoter, en entraînant le second panneau avant 5, entre une position fermée schématisée aux figures 1 et 2, dans laquelle il recouvre l'habitacle 3, et une position ouverte dans laquelle le premier panneau arrière 4 et le second panneau avant 5 sont logés dans leur position sensiblement superposée, derrière l'habitacle 3, dans une position qui peut varier suivant le type de véhicule, par exemple dans la position sensiblement horizontale schématisée à la figure 2, dans le coffre arrière 15 ménagé derrière le dossier 16 du siège arrière, schématisé en 17, du véhicule 2 représenté à la figure 2.

Suivant l'invention, et comme représenté aux figures 1 et 2, le second panneau avant 5 est relié au premier panneau arrière 4 par l'intermédiaire de deux jeux de deux bras auxiliaires pivotants avant 18 et arrière 19 sensiblement parallèles articulés chacun à leur extrémité arrière en un point d'articulation arrière respectif 20, 21 fixé sur le premier panneau arrière 4 et à leur extrémité avant en un point d'articulation avant respectif 22, 23 fixé sur le second panneau avant 5.

Le système de toit 1 comprend en outre des moyens pour faire pivoter les deux jeux de bras auxiliaires 18, 19 dans un sens ou dans l'autre quand on ouvre ou ferme ledit système de toit 1.

Comme schématisé à la figure 1, dans la position fermée du toit 1, le point d'articulation avant 23 du bras auxiliaire arrière 19 est situé en avant par rapport au point d'articulation arrière 20 du bras auxiliaire avant 18.

De même, l'extrémité avant 24 du bras auxiliaire arrière 19 recouvre l'extrémité arrière 25 du bras auxiliaire avant 18.

Comme on le verra ci-dessous, les deux bras auxiliaires 18, 19 d'un même jeu, c'est-à-dire d'un même côté du véhicule 2, sont agencés de manière à être situés transversalement à l'extérieur des panneaux de toit 4, 5 et sont ainsi apparents sur la surface extérieure 26 du système de toit 1.

Comme schématisé à la figure 1, le panneau arrière 4 porte, en arrière du point d'articulation arrière 21 de chaque bras arrière 19, et le panneau avant 5 porte, en avant du point d'articulation avant 22 de chaque bras avant 18, un élément de bras fixe respectif arrière 30 ou avant 29 prolongeant sensiblement le bras correspondant arrière 19 ou avant 18 respectivement vers l'arrière, dans le sens de la flèche 28, ou vers l'avant, dans le sens de la flèche 27.

La forme, le dessin et la couleur des éléments 29, 30 sont coordonnés avec la caractéristique correspondante des bras auxiliaires 18, 19.

Ainsi, dans la position fermée des panneaux 4 et 5, les éléments 29 et 30 constituent, de chaque côté du véhicule 2, avec les bras auxiliaires 18, 19, un ensemble coordonné et homogène s'intégrant parfaitement dans la carrosserie du véhicule 2 tant sur le plan purement esthétique que sur le plan aérodynamique.

Bien entendu, on pourrait prévoir un élément fixe avant 29 seul ou un élément fixe arrière 30 seul.

Les bras auxiliaires 18, 19 pourraient évidemment être actionnés par un ou plusieurs moteurs électriques (non représentés), ce qui permettrait d'ouvrir le panneau avant 5 seul, le panneau arrière 4 restant dans sa position fermée (voir figure 1).

Dans le mode de réalisation représenté à la figure 2, l'arbre 31 de pivotement de l'extrémité arrière 32 de chaque bras auxiliaire arrière 19 est actionné par l'intermédiaire d'une première bielle 33 articulée à son extrémité avant en un point d'articulation avant 34 solidaire en pivotement dudit arbre 31 de pivotement et à son extrémité arrière en un point d'articulation arrière 35 solidaire de l'un des deux bras principaux 6, 7 correspondants, c'est-à-dire situés du même côté du véhicule 2.

Dans cet exemple, le point d'articulation arrière 35 est situé sur une extension 36, s'étendant sensiblement vers le haut et vers l'avant dans la position fermée du toit 1, du bras principal arrière 7 correspondant.

Dans cet exemple, la première bielle 33 entraîne par l'intermédiaire de la première manivelle 37 un premier pignon moteur 38 qui entraîne à son tour un premier pignon mené 39 monté sur l'arbre 31 de pivotement du bras auxiliaire arrière 19 correspondant.

On voit également, dans l'exemple de la figure 2, que l'arbre 41 de pivotement de l'extrémité arrière 42 de chaque bras auxiliaire avant 18 est actionné par l'intermédiaire d'une seconde bielle 43 articulée à son extrémité avant en un point d'articulation avant 44 solidaire en pivotement de l'arbre 41 de pivotement dudit bras auxiliaire avant 18, et à son extrémité arrière en un point d'articulation arrière 45 solidaire en pivotement de l'arbre 31 de pivotement du bras auxiliaire arrière 19 correspondant, et situé par exemple sur la seconde manivelle 47 sensiblement opposée à la première manivelle 37. La seconde manivelle 47 entraîne un second pignon moteur 48 qui entraîne à son tour un second pignon mené 49 monté sur l'arbre 41 du bras avant 18 correspondant.

On peut ainsi commander l'ouverture et la fermeture du système de toit 1 à partir d'un seul moteur électrique (non représenté) situé d'un seul côté du véhicule 2 et entraînant l'un des bras principaux, 6, 7, de préférence le bras principal arrière 7 correspondant.

On peut également préférer installer un moteur électrique de chaque côté du véhicule.

Dans ces conditions, le pivotement du panneau avant 5 par rapport au panneau arrière 4 dans un sens ou dans l'autre se produit en même temps que le pivotement du panneau arrière 4 par rapport au véhicule 2.

Le rapport entre le premier pignon moteur 38 et le premier pignon mené 39, d'une part, et le rapport entre le second pignon moteur 48 et le second pignon mené 49, d'autre part, peuvent être choisis de façon à régler l'angle de rotation respectif de chaque bras auxiliaire avant 18 et arrière 19 en fonction de la géométrie spécifique du système de toit 1 de chaque véhicule.

De même, les bras auxiliaires 18 et 19 forment avec les panneaux 4 et 5 un quadrilatère déformable qui a sensiblement la forme d'un parallélogramme.

On peut ainsi régler la longueur et l'angle de rotation de chacun des bras auxiliaires 18, 19 de façon à optimiser le mouvement de pivotement et la position finale ouverte du panneau avant 5 par rapport au panneau arrière 4, en fonction de la position et de la forme de chacun de ces bras 18, 19 dans la position fermée du système de toit 1, qui dépendent de la silhouette générale et du style du véhicule 2.

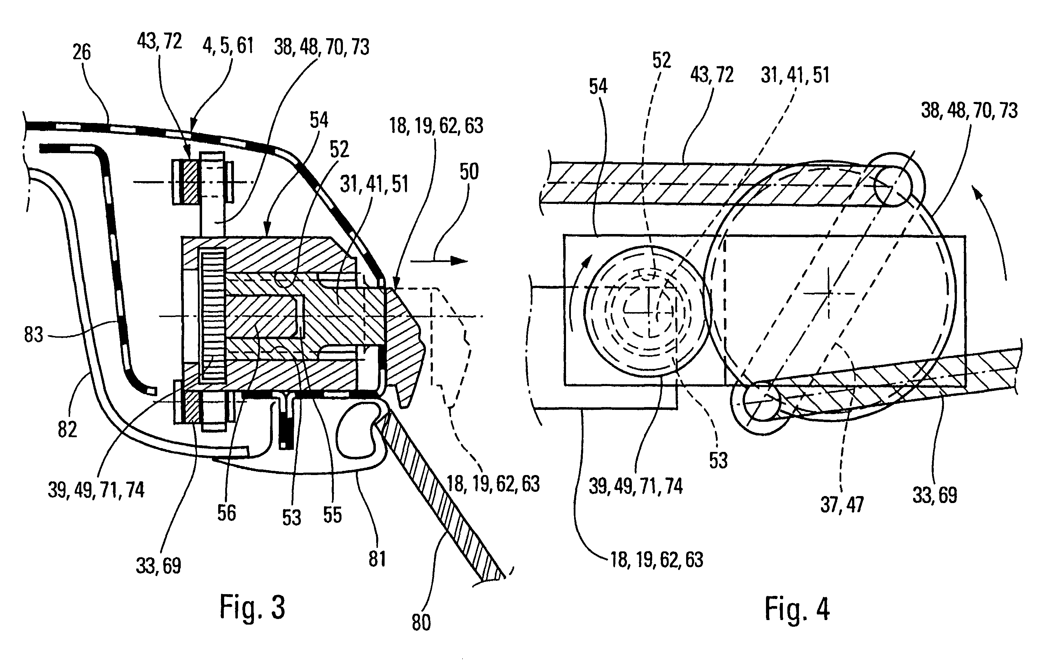

Comme représenté en détail aux figures 3 et 4, le système de toit 1 comprend des moyens agencés de façon telle que l'arbre 31, 41 de pivotement de l'extrémité arrière de chaque bras auxiliaire 18, 19 est déplacé transversalement et axialement vers l'extérieur, dans le sens schématisé par la flèche 50, pendant le pivotement dudit bras auxilaire 18, 19. Il en est de même de l'arbre de pivotement 51 de l'extrémité avant de chaque bras auxiliaire 18, 19.

Dans l'exemple représenté, l'arbre 31, 41, 51 de pivotement de chaque bras auxiliaire 18, 19 comprend une partie périphérique extérieure 52 filetée adaptée à coopérer avec une partie cylindrique intérieure 53 taraudée d'un élément formant écrou 54 fixe sur le panneau de toit 4, 5 correspondant.

Ce mouvement de translation axiale peut être imposé par le dessin spécifique du système de toit 1.

Chaque arbre mené 31, 41 comporte au niveau de la partie filetée 52 une cavité axiale 55 de section carrée adaptée à recevoir avec jeu un mandrin axial 56 de section carrée complémentaire solidaire en rotation du pignon mené 39, 49 correspondant.

On pourrait modifier ces particularités structurelles d'une manière connue quelconque pour désolidariser partiellement le mouvement de pivotement du panneau avant 5 par rapport au mouvement de pivotement du panneau arrière 4.

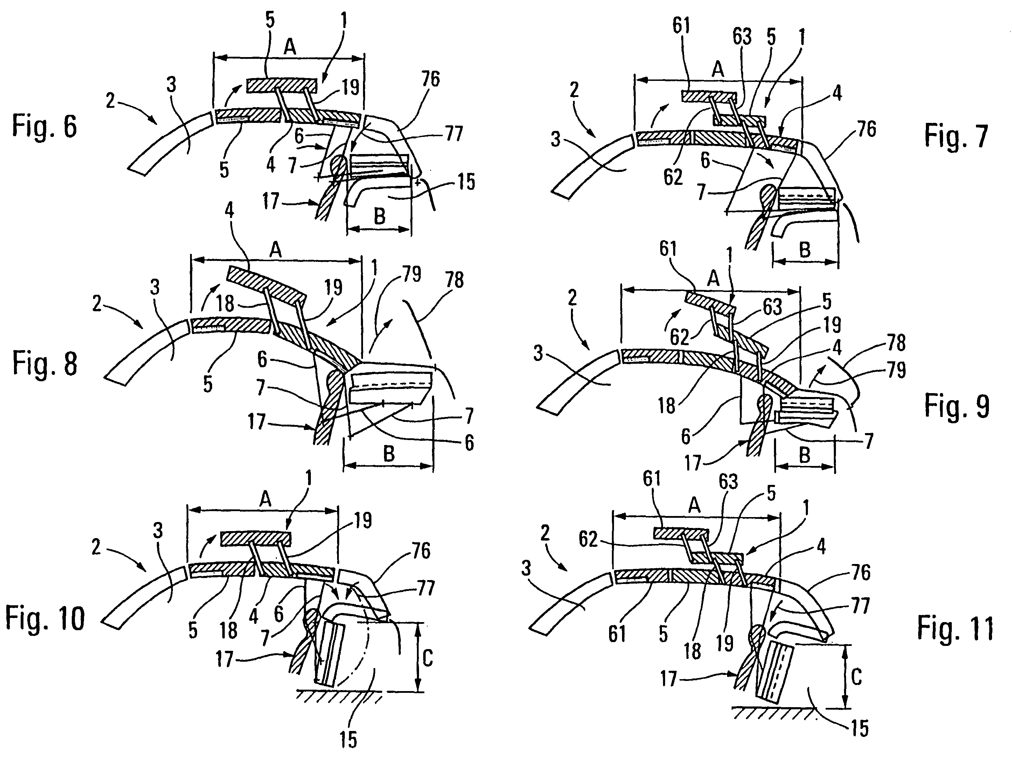

Dans le mode de réalisation de la figure 5, le système de toit 1 comporte un troisième panneau avant 61 situé dans la position fermée du toit 1 en avant du second panneau avant 5 et relié audit second panneau avant 5 par l'intermédiaire de deux jeux de seconds bras auxiliaires pivotants avant 62 et arrière 63 sensiblement parallèles articulés chacun à leur extrémité arrière respectivement en 64 et 65 sur le second panneau avant 5 et à leur extrémité avant respectivement en 66 et 67 sur le troisième panneau avant 61.

A cet effet, et par similitude avec le mécanisme décrit ci-dessus en référence à la figure 2, une extension 68 du premier bras auxiliaire arrière 19 entraîne une troisième bielle 69 qui entraîne à son tour en rotation un troisième pignon moteur 70. Le pignon 70 entraîne en rotation, par l'intermédiaire du troisième pignon mené 71, le second bras arrière 63.

De la même manière, le troisième pignon moteur 70 entraîne le second bras auxiliaire avant 62 par l'intermédiaire de la quatrième bielle 72, solidaire en rotation du quatrième pignon moteur 73, lequel est engrené avec un quatrième pignon mené 74 solidaire en rotation du second bras avant 62.

Les seconds bras auxiliaires 62, 63 forment, avec le second panneau avant 5 et le troisième avant 61 un quadrilatère déformable ayant sensiblement la forme d'un parallélogramme qui entraîne le troisième panneau avant 61.

Bien entendu, le système de toit de la figure 5 comprend des moyens agencés de façon telle que l'arbre de pivotement (non représenté) de chaque extrémité de chaque second bras auxiliaire 62, 63 est déplacé transversalement et axialement vers l'extérieur pendant le pivotement desdits bras 62, 63 pour l'ouverture du système de toit 1, comme déjà décrit ci-dessus pour le premier panneau arrière 4 et le second panneau avant 5.

On a schématisé aux figures 6 et 7 respectivement l'installation d'un toit découvrable à deux panneaux selon le mode de réalisation de la figure 1, et d'un toit recouvrable à trois panneaux suivant le mode de réalisation de la figure 5, sur un véhicule de type bi-corps, du genre break, comportant un élément de carrosserie arrière 76 adapté à être rabattu vers l'avant et vers le bas, selon la flèche 77, sous les panneaux pivotants 4, 5 ou 4, 5, 61 repliés en position sensiblement horizontale dans leur position ouverte au-dessus dudit élément 76.

Dans le mode de réalisation des figures 8 et 9, on a adapté un toit découvrable à deux panneaux (figure 8) ou à trois panneaux (figure 9) sur un véhicule tri-corps, par exemple du genre coupé, comportant un couvercle de coffre arrière 78 adapté à être ouvert vers le haut et vers l'arrière (flèche 79) pour permettre le rangement en position sensiblement horizontale, dans le coffre arrière 15, des panneaux 4, 5 ou 4, 5, 61.

Dans le mode de réalisation des figures 10 et 11, on a schématisé un toit découvrable à deux panneaux (figure 10) ou à trois panneaux (figure 11) sur un véhicule du type bi-corps, du genre break.

Dans ce mode de réalisation, les bras principaux 6 et 7, ou de manière plus générale les moyens de pivotement du premier panneau arrière 4, sont agencés de manière à permettre un rangement des panneaux 4, 5 (figure 10) ou 4, 5, 61 (figure 11) en position sensiblement verticale dans le coffre arrière 15 derrière le dossier 16 du siège arrière 17.

Dans ce mode de réalisation, l'élément de carrosserie arrière 76, après avoir pivoté vers le haut et vers l'arrière pour permettre le pivotement des panneaux du système de toit 1, pivote vers l'avant et vers le bas, selon la flèche 77, pour recouvrir les panneaux de toit logés dans le coffre arrière 15.

Bien entendu, la présente invention n'est pas limitée aux modes de réalisation que l'on vient de décrire, et on peut apporter à ceux-ci de nombreux changements et modifications sans sortir du domaine de l'invention.

On peut par exemple remplacer les bras principaux 6, 7 par d'autres moyens connus permettant le pivotement du premier panneau arrière 4 vers l'arrière, par exemple par un arceau articulé sur le châssis 10 de chaque côté du véhicule pour permettre le rangement du panneau arrière 4, associé aux panneaux avant 5 ou 5, 61, en position sensiblement verticale dans le coffre arrière 15 du véhicule.

On peut également remplacer les mécanismes décrits par d'autres mécanismes classiques remplissant la même fonction pour obtenir le même résultat.

Enfin, la figure 3 montre clairement que la position transversalement extérieure des bras auxiliaires 18, 19, 62, 63 par rapport aux panneaux de toit 4, 5, 61 permet de choisir de faire pivoter les bras auxiliaires 18, 19, 62, 63 vers le bas pour loger le panneau avant 5 sous le panneau arrière 4.

Une étude détaillée des pivotements concomitants du panneau arrière 4 et du panneau avant 5 montrerait s'il est nécessaire ou souhaitable de baisser au préalable les vitres latérales schématisées en 80 à la figure.

Le système de toit 1 peut être installé sur une structure découvrable quelconque autre qu'un véhicule, par exemple sur un bateau.

Comme schématisé à la figure 3, les panneaux 4, 5, 61 sont des sous-ensembles complets portant les joints d'étanchéité latéraux 81 et transversaux (non représentés) adéquats, ainsi que le garnissage intérieur 82 recouvrant les éléments structurels 83 nécessaires pour donner à chaque panneau la résistance et la rigidité requises, et les mécanismes décrits ci-dessus.

## Revendications

1. Système de toit rigide escamotable (1) pour structure découvrable (2), notamment pour véhicule, ce toit (1) étant constitué d'au moins deux panneaux rigides (4, 5) mobiles l'un par rapport à l'autre et par rapport à l'habitacle (3) de la structure (2), à savoir un premier panneau arrière (4) et un second panneau avant (5) solidarisés l'un à l'autre par des moyens de solidarisation agencés de manière telle que le second panneau avant (5) est mobile par rapport au premier panneau arrière (4) entre une position fermée dans laquelle il recouvre l'habitacle (3), et une position ouverte dans laquelle il se trouve dans une position sensiblement superposée par rapport au premier panneau arrière (4), le premier panneau arrière (4) étant monté de manière pivotante par rapport au châssis (10) de la structure (2), de façon à pivoter, en entraînant le second panneau avant (5), entre une position fermée, dans laquelle il recouvre l'habitacle (3), et une position ouverte dans laquelle le premier panneau arrière (4) et le second panneau avant (5) sont logés, dans leur position sensiblement superposée, derrière l'habitacle (3), le second panneau avant (5) étant relié au premier panneau arrière (4) par l'intermédiaire de deux jeux de deux bras auxiliaires pivotants avant (18) et arrière (19) sensiblement parallèles articulés chacun à leur extrémité arrière en un point d'articulation arrière respectif (20, 21) fixé sur le premier panneau arrière (4) et à leur extrémité avant en un point d'articulation avant respectif (22, 23) fixé sur le second panneau avant (5), **caractérisé en ce que** les deux bras auxiliaires (18, 19) d'un même jeu sont agencés de manière à être situés transversalement à l'extérieur des panneaux de toit (4, 5), et **en ce que** le système de toit (1) comprend des moyens pour faire pivoter l'arbre de pivotement (31, 41) respectif de l'extrémité arrière (32, 42) de chaque bras (18,19) des deux jeux de bras auxiliaires (18, 19) dans un sens ou dans l'autre pour ouvrir ou fermer ledit système de toit (1).

2. Système de toit selon la revendication 1, **caractérisé en ce que**, dans la position fermée du toit, le point d'articulation avant (23) du bras auxiliaire arrière (19) est situé en avant par rapport au point d'articulation arrière (20) du bras auxiliaire avant (18), et l'extrémité avant (24) du bras auxiliaire arrière (19) recouvre l'extrémité arrière (25) du bras auxiliaire avant (18).

3. Système de toit selon la revendication 1 ou 2, **caractérisé en ce que** le panneau arrière (4) porte, en arrière du point d'articulation arrière (21) de chaque bras arrière (19), et/ou le panneau avant (5) porte, en avant du point d'articulation avant (22) de chaque bras avant (18), un élément de bras fixe respectif arrière (30) et/ou avant (29) prolongeant sensiblement le bras correspondant arrière (19) ou avant (18) respectivement vers l'arrière ou vers l'avant.

4. Système de toit selon l'une quelconque des revendications précédentes, **caractérisé en ce qu'**il comprend des moyens agencés de façon telle que l'arbre (31, 41, 51) de pivotement de chaque extrémité de chaque bras auxiliaire (18, 19) est déplacé transversalement et axialement vers l'extérieur pendant le pivotement dudit bras (18, 19) pour l'ouverture du système de toit (1).

5. Système de toit selon la revendication 4, **caractérisé en ce que** l'arbre (31, 41, 51) de pivotement de chaque extrémité de chaque bras auxiliaire (18, 19) comprend une partie périphérique extérieure cylindrique (52) filetée adaptée à coopérer avec une partie cylindrique intérieure (53) taraudée d'un élément formant écrou (54) fixé sur le panneau de toit (4, 5) correspondant.

6. Système de toit selon l'une quelconque des revendications précédentes, **caractérisé en ce que** l'arbre (31) de pivotement de l'extrémité arrière (32) de chaque bras auxiliaire arrière (19) est actionné par l'intermédiaire d'une première bielle (33) articulée à son extrémité avant en un point d'articulation avant (34) solidaire en pivotement dudit arbre de pivotement (31) et à son extrémité arrière en un point d'articulation arrière (35), et **en ce que**, par exemple, la première bielle (33) entraîne un premier pignon moteur (38) qui entraîne un premier pignon mené (39) monté sur l'arbre (31) de pivotement du bras auxiliaire arrière (19) correspondant.

7. Système de toit selon la revendication 6, **caractérisé en ce que** l'arbre (41) de pivotement de l'extrémité arrière (25) de chaque bras auxiliaire avant (18) est actionné par l'intermédiaire d'une seconde bielle (43) articulée à son extrémité avant en un point d'articulation avant (44) solidaire en pivotement dudit arbre (41) de pivotement dudit bras auxiliaire avant (18), et à son extrémité arrière en un point d'articulation arrière (45) solidaire en pivotement de l'arbre de pivotement du bras auxiliaire arrière (19) correspondant, et **en ce que**, par exemple, la seconde bielle (43) entraîne un second pignon moteur (48) qui entraîne un second pignon mené (49) monté sur ledit arbre (41).

8. Système de toit selon la revendication 6 ou 7, **caractérisé en ce que** le rapport entre le premier pignon moteur (38) et le premier pignon mené (39), d'une part, et/ou le rapport entre le second pignon moteur (48) et le second pignon mené (49), d'autre part, peuvent être choisis de façon à régler l'angle de rotation respectif de chaque bras auxiliaire arrière (19) et/ou avant (18) en fonction de la géométrie spécifique du système de toit (1).

9. Système de toit selon l'une quelconque des revendications 6 à 8, le premier panneau arrière (4) étant monté de manière pivotante sur deux jeux de bras principaux pivotants avant (6) et arrière (7) sensiblement parallèles articulés chacun à une extrémité inférieure à un point d'articulation inférieur respectif (8, 9) fixé au châssis (10) de la structure (2), et à une extrémité supérieure à un point d'articulation supérieur respectif (11, 12) fixé au premier panneau arrière (4), **caractérisé en ce que** la première bielle (33) est articulée en un point d'articulation arrière (35) solidaire de l'un des deux bras principaux (6, 7) correspondants, et avantageusement situé sur une extension (36) du bras principal arrière (7) correspondant.

10. Système de toit selon l'une quelconque des revendications précédentes, **caractérisé en ce qu'**il comporte un troisième panneau avant (61) situé dans la position fermée du toit (1) en avant du second panneau avant (5) et relié audit second panneau avant (5) par l'intermédiaire de deux jeux de seconds bras auxiliaires pivotants (62, 63) sensiblement parallèles articulés chacun à leur extrémité arrière sur le second panneau avant (5) et à leur extrémité avant sur le troisième panneau avant (61).

## Patentansprüche

1. Starres, versenkbares Dachsystem (1) für eine abdeckbare Struktur (2), insbesondere für ein Fahrzeug, wobei dieses Dach (1) sich aus mindestens zwei starren Platten (4, 5) zusammensetzt, die gegeneinander und bezüglich des Fahrzeuginnenraums (3) der Struktur (2) beweglich sind, nämlich eine erste hintere Platte (4) und eine zweite vordere Platte (5), die eine zur anderen durch Verbindungsmittel derart verbunden angeordnet sind, so dass die zweite vordere Platte (5) beweglich im Vergleich zur ersten hinteren Platte (4) sich zwischen einer geschlossenen Position befindet, in welcher sie den Fahrzeuginnenraum (3) bedeckt, und einer offenen Position, in welcher sie sich in einer leicht überlagerten Position gegenüber der ersten hinteren Platte (4) befindet, wobei die erste hintere Platte (4) in einer schwenkbaren Weise im Vergleich zur Chassis (10) der Struktur (2) befestigt ist, von einer Schwenkart, die die zweite vordere Platte (5) zwischen einer geschlossenen Position, in welcher sie den Fahrzeuginnenraum (3) bedeckt und einer offenen Position, in welcher die erste hintere Platte (4) und die zweite vordere Platte (5) in ihrer leicht überlagerten Position untergebracht sind, mitzuführen, wobei hinter dem Fahrzeuginnenraum (3), die zweite vordere Platte (5) zur ersten hinteren Platte (4) durch die Verbindung der zwei Lenkungsspiele der zwei vorderen (18) und hinteren (19) Hilfsschwenkarme verbunden ist, welche leicht parallel zu jedem ihres hinteren Teils in einem entsprechenden hinteren Gelenkpunkt (20, 21) gelenkig sind, der auf der ersten hinteren Platte (4) und auf ihrem vorderen Teil in einem entsprechenden vorderen Gelenkpunkt (22, 23) befestigt ist, welcher auf der vorderen zweiten Platte (5) befestigt ist, **dadurch gekennzeichnet, dass** die zwei Hilfsarme (18, 19) eines gleichen Lenkungsspiels derart verbunden sind, dass sie transversal an das Äußere der Dachplatten (4, 5) angeordnet sind, und indem das Dachsystem (1) Mittel zum Schwenken der Schwenkachse (31, 41) des hinteren Teils (32, 42) von jedem Arm (18, 19) entsprechend aufweist, der zwei Lenkspiele der Hilfsarme (18, 19) in eine Richtung oder in die andere aufweist, um das Dachsystem (1) zu öffnen oder zu schließen.

2. Dachsystem gemäß Anspruch 1, **dadurch gekennzeichnet, dass** in der geschlossenen Position des Daches der vordere Gelenkpunkt (23) des hinteren Hilfsarmes (19) im Vergleich zum hinteren Gelenkpunkt (20) des vorderen Hilfsarmes (18) vorne angeordnet ist, und wobei der vordere Teil (24) des hinteren Hilfsarmes (19) den hinteren Teil (25) des vorderen Hilfsarmes (18) bedeckt.

3. Dachsystem gemäß Anspruch 1 oder 2, **dadurch gekennzeichnet, dass** die hintere Platte (4) hinter dem hinteren Gelenkpunkt (21) von jedem hinteren Arm (19) und/oder der vorderen Platte (5), vor dem vorderen Gelenkpunkt (22) jedes vorderen Arms (18) ein festes hinteres (30) und/oder vorderes (29) Armelement trägt, welches den entsprechenden hinteren (19) oder vorderen (18) Arm nach hinten oder nach vorne entsprechend leicht verlängert.

4. Dachsystem nach irgendeinem der vorstehenden Ansprüche, **dadurch gekennzeichnet, dass** es derartige Verbindungsmittel aufweist, so dass die Schwenkachse (31, 41, 51) von jedem Teil von jedem Hilfsarm (18, 19) während der Schwenkung des Arms (18, 19) transversal und axial nach außen für die Öffnung des Dachsystems (1) verschoben wird.

5. Dachsystem gemäß Anspruch 4, **dadurch gekennzeichnet, dass** die Schwenkachse (31, 41, 51) von jedem Teil von jedem Hilfsarm (18, 19) einen peripheren, zylindrischen Außenteil (52) umfasst, welcher gezogen angeordnet ist, um mit einem Teil des zylindrischen Inneren (53) zusammenzuwirken, welches von einem Element, das eine Mutter (54) bildet, gewindegeschnitten wurde, welches auf der entsprechenden Dachplatte (4, 5) fixiert wird.

6. Dachsystem gemäß irgendeinem der vorstehenden Ansprüche, **dadurch gekennzeichnet, dass** die Schwenkachse (31) des hinteren Teils (32) jedes hinteren Hilfsarmes (19) durch die Verbindung einer ersten Pleuelstange (33) betätigt wird, welche zu ihrem vorderen Teil in einem vorderen für die Schwenkung der Schwenkachse (31) verantwortlichen Gelenkpunkt (34), und zu ihrem hinteren Teil in einem hinteren Gelenkpunkt (35) gelenkig ist, beispielsweise dadurch, dass die erste Pleuelstange (33) ein erstes motorisches Rad (38) mitnimmt, welches ein erstes geführtes Rad (39) mitnimmt, welches auf der Schwenkachse (31) des entsprechenden hinteren Hilfsarm (19) befestigt ist.

7. Dachsystem gemäß Anspruch 6, **dadurch gekennzeichnet, dass** die Schwenkachse (41) des hinteren Teils (25) jedes vorderen Hilfsarmes (18) durch die Verbindung von einer zweiten Pleuelstange (43) betätigt wird, welche zu ihrem vorderen Teil in einem vorderen Gelenkpunkt (44) gelenkig ist, welcher für die Schwenkung der Schwenkachse (41) des vorderen Hilfsarmes (18) verantwortlich ist und bei seinem hinteren Teil in einem hinteren für die Schwenkung der Schwenkachse des Gelenkpunktes (45) des entsprechenden hinteren Hilfsarmes (19) verantwortlich ist, beispielsweise dadurch, dass die zweite Pleuelstange (43) ein zweites motorisches Rad (48) mitführt, welches ein zweites geführtes Rad (49) auf der Achse (41) mitführt.

8. Dachsystem gemäß Anspruch 6 oder 7, **dadurch gekennzeichnet, dass** der Vergleich zwischen dem ersten motorischen Rad (38) und dem ersten geführten Rad (39) einerseits, und/oder der Vergleich zwischen dem zweiten motorischen Rad (48) und dem zweiten geführten Rad (49) andererseits, derart gewählt werden kann, um den entsprechenden Rotationswinkel von jedem hinteren Hilfsarm (19) und/oder vorderen (18) in der Funktion der entsprechenden Geometrie des Dachsystems (1) zu wählen.

9. Dachsystem gemäß irgendeinem der Ansprüche 6 bis 8, wobei die erste hintere Platte (4) in einer schwenkbaren Art auf zwei Lenkspielen der schwenkbaren vorderen (6) und hinteren (7) Hauptsarme befestigt ist, welche jeder leicht parallel um einen unteren Teil bei einem entsprechenden unteren Gelenkpunkt (8, 9) gelenkig ist, welche an der Chassis (10) der Struktur (2) und zu einem oberen Teil bei einem entsprechenden oberen Gelenkpunkt (11, 12) befestigt sind, welcher zur ersten hinteren Platte (4) befestigt ist, **dadurch gekennzeichnet, dass** die erste Pleuelstange (33) in einem hinteren Gelenkpunkt (35) gelenkig ist, die für einen der zwei entsprechenden Hauptarme (6, 7) verantwortlich ist und vorteilhaft in einer Verlängerung (36) des entsprechenden hinteren Hauptarmes (7) angeordnet ist.

10. Dachsystem gemäß irgendeinem der vorstehenden Ansprüche, **dadurch gekennzeichnet, dass** es eine dritte vordere Platte (61) umfasst, welche in der geschlossenen Position des Daches (1) vor der zweiten vorderen Platte (5) angeordnet ist und zur zweiten vorderen Platte (5) durch die Verbindung des Gelenkspiels der zweiten schwenkbaren Hilfsarme (62, 63) verbunden ist, welcher jeder leicht parallel an seinem hinteren Teil auf der zweiten vorderen Platte (5) und an seinem vorderen Teil auf der dritten vorderen Platte (61) gelenkig ist.

## Claims

1. Folding rigid roof system (1) for a convertible structure (2), in particular for a motor vehicle, said roof (1) consisting of at least two rigid panels (4, 5) which are movable relative to one another and relative to the passenger compartment (3) of the structure (2), namely a first rear panel (4) and a second front panel (5) attached to one another by attachment means arranged so that the second front panel (5) is movable relative to the first rear panel (4) between a closed position in which it covers the passenger compartment (3) and an open position in which it is in a substantially superimposed position relative to the first rear panel (4), the first rear panel (4) being pivotably mounted relative to the chassis (10) of the structure (2) so as to pivot, taking with it the second front panel (5), between a closed position in which it covers the passenger compartment (3) and an open position in which the first rear panel (4) and the second front panel (5) are housed, in their substantially superimposed position, behind the passenger compartment (3), the second front panel (5) being connected to the first rear panel (4) via two substantially parallel sets of front (18) and rear (19) pivoting auxiliary arms, each hinged at their rear end at a respective rear articulation point (20, 21) fixed to the first rear panel (4) and at their front end at a respective front articulation point (22, 23) fixed to the second front panel (5), **characterised in that** the two auxiliary arms (18, 19) in the same set are arranged so as to be located transversely outside the roof panels (4, 5), and **in that** the roof system (1) comprises means for pivoting the respective pivoting shaft (31, 41) of the rear end (32, 42) of each arm (18, 19) of the two auxiliary sets of arms (18, 19) in one direction or the other in order to open or close said roof system (I).

2. Roof system according to claim 1, **characterised in that**, in the closed position of the roof, the front articulation point (23) of the rear auxiliary arm (19) is located forward of the rear articulation point (20) of the front auxiliary arm (18), and the front end (24) of the rear auxiliary arm (19) covers the rear end (25) of the front auxiliary arm (18).

3. Roof system according to claim 1 or 2, **characterised in that** the rear panel (4) carries, rearward of the rear articulation point (21) of each rear arm (19), and/or the front panel (5) carries, forward of the front articulation point (22) of each front arm (18), a respective rear (30) and/or front (29) fixed arm element substantially prolonging the corresponding rear (19) or front (18) arm rearwards or forwards, respectively.

4. Roof system according to any one of the preceding claims, **characterised in that** it comprises means arranged so that the pivoting shaft (31, 41, 51) of each end of each auxiliary arm (18, 19) is displaced transversely and axially outwards during the pivoting of said arm (18, 19) for opening the roof system (1).

5. Roof system according to claim 4, **characterised in that** the pivoting shaft (31, 41, 51) of each end of each auxiliary arm (18, 19) comprises a threaded cylindrical outer peripheral portion (52) adapted to cooperate with a threaded cylindrical inner portion (53) of an element forming a nut (54) fixed to the corresponding roof panel (4, 5).

6. Roof system according to any one of the preceding claims, **characterised in that** the pivoting shaft (31) of the rear end (32) of each rear auxiliary arm (19) is actuated via a first connecting rod (33) articulated at its front end at a front articulation point (34), pivotably connected to said pivoting shaft (31), and at its rear end at a rear articulation point (35), and **in that**, for example, the first connecting rod (33) drives a first drive pinion (38) which drives a first driven pinion (39) mounted on the pivoting shaft (31) of the corresponding rear auxiliary arm (19).

7. Roof system according to claim 6, **characterised in that** the pivoting shaft (41) of the rear end (25) of each auxiliary front arm (18) is actuated via a second connecting rod (43) articulated at its front end at a front articulation point (44), pivotably connected to said pivoting shaft (41) of said auxiliary front arm (18), and at its rear end at a rear articulation point (45), pivotably connected to the pivoting shaft of the corresponding rear auxiliary arm (19), and **in that**, for example, the second connecting rod (43) drives a second drive pinion (48) which drives a second driven pinion (49) mounted on said shaft (41).

8. Roof system according to claim 6 or 7, **characterised in that** the ratio between the first drive pinion (38) and the first driven pinion (39), on the one hand, and/or the ratio between the second drive pinion (48) and the second driven pinion (49), on the other hand, may be selected so as to regulate the respective angle of rotation of each rear (19) and/or front (18) auxiliary arm as a function of the specific geometry of the roof system (1).

9. Roof system according to any one of claims 6 to 8, the first rear panel (4) being pivotably mounted on two substantially parallel front and rear sets of pivoting main arms (6) and (7), respectively, each articulated at a lower end at a respective lower articulation point (8, 9) fixed to the chassis (10) of the structure (2), and at an upper end at a respective upper articulation point (11, 12) fixed to the first rear panel (4), **characterised in that** the first connecting rod (33) is articulated at a rear articulation point (35) integral with one of the two corresponding main arms (6, 7), and advantageously located on an extension (36) of the corresponding rear main arm (7).

10. Roof system according to any one of the preceding claims, **characterised in that** it comprises a third front panel (61) located in the closed position of the roof (1) in front of the second front panel (5) and connected to said second front panel (5) via two substantially parallel sets of pivoting auxiliary arms (62, 63) which are each articulated at their rear end on the second front panel (5) and at their front end on the third front panel (61).
